# EUROPÄISCHE PATENTANMELDUNG

(11) **EP 4 831 684 A1**
(43) Veröffentlichungstag der Anmeldung: **28.10.2026**
(21) Anmeldenummer: 26169741.1
(22) Anmeldetag: 31.03.2026
(51) Int. Cl.: G01S 7/497

(54) **OPTOELEKTRONISCHER EMPFÄNGER, OPTOELEKTRONISCHER SENSOR, VERWENDUNG UND VERFAHREN FÜR ABSTANDSMESSUNG MITTELS LICHTLAUFZEITVERFAHREN**

(30) Priorität: 24.04.2025 DE 102025115860
(71) Anmelder: SICK AG, 79183 Waldkirch (DE)
(72) Erfinder: Herbstritt, Alexander, 79104 Freiburg (DE); Geisemeyer, Ino, 79117 Freiburg (DE); Payne, Andrew, 3118 Papamoa (NZ)
(74) Vertreter: Manitz Finsterwald Patent- und Rechtsanwaltspartnerschaft mbB

(57) **Zusammenfassung**

Ein optoelektronischer Empfänger, insbesondere für Abstandsmessung mittels Laufzeitverfahren, wird bereitgestellt, umfassend zumindest einen Signalgenerator zur Erzeugung zumindest eines Referenzsignals, ein Pixelarray mit zumindest einem differentiellen Pixel, wobei das Pixelarray ausgebildet ist, basierend auf empfangenem Empfangslicht ein differentielles Ausgangssignal zu erzeugen und auszugeben, zumindest eine Verarbeitungseinheit zur Signalverarbeitung, und zumindest eine Verbindungseinheit, welche mit dem Pixelarray, dem Signalgenerator und der Verarbeitungseinheit verbunden ist und ausgebildet ist, wahlweise das Pixelarray oder den Signalgenerator mit der Verarbeitungseinheit zu koppeln, sodass wahlweise das differentielle Ausgangssignal als differentielles Eingangssignal oder das Referenzsignal in die Verarbeitungseinheit zur Signalverarbeitung eingespeist werden kann. Die Verbindungseinheit ist ausgebildet, zum Zweck der Diagnose, insbesondere für die Aufnahme von Diagnosedaten, den Signalgenerator mit der Verarbeitungseinheit in bestimmten Zeitabständen, und vorzugsweise mit der gleichen Aufnahmerate wie die Abstandsmessung und/oder am Ende jeder Beleuchtungsphase der Abstandsmessung, zu koppeln.

## Beschreibung

Die Erfindung betrifft einen optoelektronischen Empfänger, einen optoelektronischen Sensor, eine Verwendung und ein Verfahren, insbesondere für Abstandsmessung mittels (Licht-)Laufzeitverfahren, wobei eine Verbindungseinheit für Diagnosezwecke vorhanden ist.

Bei herkömmlichen optoelektronischen Empfängern und optoelektronischen Sensoren werden Komponenten oft redundant vorgesehen, um einen möglichst sicheren Betrieb des Empfängers bzw. des optoelektronischen Sensors zu ermöglichen. Dabei können die hierin verwendeten Begriffe sicher oder Sicherheit im Sinne von bestimmten sicherheitsspezifischen Normen verstanden werden, wie beispielsweise ISO 13849 oder IEC 62998. Eine Redundanz (d.h. die Verwendung von zwei optoelektronischen Empfängern oder redundanten Strukturen innerhalb des Empfängers) kann jedoch bestimmte Nachteile mit sich bringen, wie zum Beispiel eine größere Chipgröße, eine größere Gerätegröße, einen höheren Stromverbrauch, eine längere Verarbeitungszeit und/oder höhere Kosten.

Die Überwachung bzw. das Testen von Komponenten eines optoelektronischen Empfängers, idealerweise während seines Betriebs, kann die Leistungsfähigkeit des optoelektronischen Empfängers, insbesondere im Hinblick auf seine funktionelle Sicherheit, erhöhen. Insbesondere kann es für sicherheitsgerichtete Anwendungen förderlich oder erforderlich sein, durch die Implementierung von Diagnosemaßnahmen einen bestimmten Grad an Diagnosedeckung zu erreichen. In anderen Worten sollen bestimmte interne Fehler durch geeignete Diagnosemaßnahmen möglichst sicher erkannt werden können. Dies kann von besonderer Bedeutung sein, wenn Komponenten des optoelektronischen Empfängers nicht redundant vorhanden sind. Zudem besteht Bedarf, Diagnosemaßnahmen für optoelektronische Empfänger mit differentiellen Pixeln bereitzustellen.

Der Erfindung liegt die Aufgabe zugrunde, die Effizienz und Leistungsfähigkeit eines optoelektronischen Empfängers mit differentiellen Pixeln, insbesondere im Hinblick auf seine funktionelle Sicherheit, zu verbessern.

Zur Lösung der Aufgabe ist ein optoelektronischer Empfänger mit den Merkmalen des Anspruchs 1 vorgesehen.

Der erfindungsgemäße optoelektronischen Empfänger, insbesondere für Abstandsmessung mittels (Licht-)Laufzeitverfahren, umfasst zumindest einen Signalgenerator zur Erzeugung zumindest eines Referenzsignals und ein Pixelarray mit zumindest einem differentiellen Pixel, wobei das Pixelarray ausgebildet ist, basierend auf empfangenem Empfangslicht ein differentielles Ausgangssignal zu erzeugen und auszugeben. Der optoelektronischen Empfänger umfasst ferner zumindest eine Verarbeitungseinheit zur Signalverarbeitung und zumindest eine Verbindungseinheit, welche mit dem Pixelarray, dem Signalgenerator und der Verarbeitungseinheit verbunden ist und ausgebildet ist, wahlweise das Pixelarray oder den Signalgenerator mit der Verarbeitungseinheit zu koppeln, sodass wahlweise das differentielle Ausgangssignal als differentielles Eingangssignal oder das Referenzsignal in die Verarbeitungseinheit zur Signalverarbeitung eingespeist werden kann. Die Verbindungseinheit ist ausgebildet, zum Zweck der Diagnose, insbesondere für die Aufnahme von Diagnosedaten, den Signalgenerator mit der Verarbeitungseinheit in bestimmten Zeitabständen, und vorzugsweise mit der gleichen Aufnahmerate wie die Abstandsmessung und/oder am Ende jeder Beleuchtungsphase der Abstandsmessung, zu koppeln.

Der Erfindung liegt mit anderen Worten der Gedanke zugrunde, in dem optoelektronischen Empfänger mit zumindest einem differentiellen Pixel eine Verbindungseinheit vorzusehen oder eine vorhandene Verbindungseinheit zu nutzen, mittels welcher wahlweise eine Kopplung zwischen der Verarbeitungseinheit und dem Pixelarray oder zwischen der Verarbeitungseinheit und dem Signalgenerator hergestellt werden kann. Damit kann gemeint sein, dass die Verbindungseinheit ausgebildet ist, entweder das Pixelarray mit der Verarbeitungseinheit oder den Signalgenerator mit der Verarbeitungseinheit zu koppeln, sodass entweder das differentielle Ausgangssignal als das differentielle Eingangssignal oder das Referenzsignal in die Verarbeitungseinheit zur Signalverarbeitung eingespeist werden kann. Insbesondere kann zwischen diesen zwei Kopplungseinstellungen flexibel gewechselt werden, um eine Diagnose des auf differentiellen Pixeln basierenden optoelektronischen Empfängers, während seines Betriebs, bereitzustellen. Der Wechsel auf die Verarbeitung des Referenzsignals in der Verarbeitungseinheit kann erlauben, auf flexible und einfache Weise in dem optoelektronischen Empfänger mit dem zumindest einem differentiellen Pixel, und insbesondere in der Verarbeitungseinheit des optoelektronischen Empfängers (und auch in weiteren Komponenten, z.B. eine nachgeschaltete Datenvorverarbeitungseinheit), Fehler zu erkennen und die funktionelle Sicherheit des optoelektronischen Empfängers während seines Betriebs zu überwachen, ohne dass redundante Hardware-Strukturen vorgesehen werden müssen. Die Implementierung des optoelektronischen Empfängers kann effizienter sein hinsichtlich (zusätzlicher) Schaltungen, des Stromverbrauchs, der Software-Anforderungen, der Verarbeitungszeit und weiteres. Insgesamt kann so die Effizienz und/oder Leistungsfähigkeit des optoelektronischen Empfängers mit zumindest einem differentiellen Pixel, insbesondere im Hinblick auf seine funktionelle Sicherheit, erhöht werden. Insbesondere kann der Einsatz (herkömmlicher) optoelektronischer Empfänger mit zumindest einem differentiellen Pixel für Sicherheitsanwendungen ermöglicht werden.

Mit anderen Worten kann mittels der Verbindungseinheit die Verarbeitungseinheit einerseits so mit dem Pixelarray gekoppelt werden, dass das differentielle Ausgangssignal als das entsprechende differentielle Eingangssignal in die Verarbeitungseinheit für die Signalverarbeitung eingespeist werden kann, und andererseits so mit dem Signalgenerator gekoppelt werden, dass das Referenzsignal für die Signalverarbeitung in die Verarbeitungseinheit eingespeist werden kann. Zum Zweck einer Diagnose, insbesondere für die Aufnahme von Diagnosedaten (zum Beispiel eines Diagnosebildes) kann das differentielle Eingangssignal (d.h. zumindest ein Signalanteil des differentiellen Eingangssignals und vorzugsweise alle Signalanteile des differentiellen Eingangssignals) mit dem Referenzsignal für die folgende Signalverarbeitung, insbesondere auf ein Steuersignal einer Steuerung hin, ersetzt werden. In anderen Worten kann für die Aufnahme der Diagnosedaten das Referenzsignal anstelle des differentiellen Eingangssignals (d.h. anstelle zumindest eines Signalanteils des differentiellen Eingangssignals und vorzugsweise anstelle aller Signalanteile des differentiellen Eingangssignals) in die Verarbeitungseinheit eingespeist und von der Verarbeitungseinheit verarbeitet werden. Diese Vorgehensweise kann erlauben, Fehler in dem optoelektronischen Empfänger, und insbesondere in der Verarbeitungseinheit und auch in weiteren Komponenten, z.B. in einer nachgeschaltete Datenvorverarbeitungseinheit, während des Betriebs des optoelektronischen Empfängers zu erkennen. Auf die Erkennung eines Fehlers in den Diagnosedaten hin kann beispielsweise ein Warnsignal ausgegeben werden.

Bei dem optoelektronischen Empfänger handelt es sich vorzugsweise um einen Sicherheits-Empfänger.

Die Aufnahmerate der Abstandsmessung kann im Bereich von 10 Hz bis 100 Hz liegen. Für die Abstandsmessung können mehrere Einzelmessungen, z.B. neun Einzelmessungen, zusammengeführt werden. Beispielsweise werden bei einer Aufnahmerate von 30 Hz insgesamt 30*9 = 270 Einzelmessungen pro Sekunde durchgeführt. Vorzugsweise kann moduliert Sendelicht ausgesendet werden, d.h. für jede Einzelmessung kann eine Vielzahl an Pulsen des Sendelichts ausgesendet werden. In der Beleuchtungsphase der Abstandsmessung können alle Beleuchtungsvorgänge umfasst sein, die zusammengenommen in einen gemessenen Abstandswert resultieren.

Mit dem Referenzsignal kann ein Stromsignal oder ein Spannungssignal, und vorzugsweise ein Spannungssignal, gemeint sein. Dementsprechend kann der Signalgenerator ein Stromgenerator oder ein Spannungsgenerator sein. Vorzugsweise umfasst der Signalgenerator einen (programmierbaren) Spannungsgenerator zur Erzeugung einer variablen Referenzspannung. Der Signalgenerator kann einen Digital-zu-Analog-Wandler ("digital-to-analog converter", DAC) umfassen.

Der optoelektronische Empfänger kann von einem Erfassungsbereich (insbesondere von Objekten in dem Erfassungsbereich) reflektiertes oder remittiertes (d.h. diffus reflektiertes) Sendelicht als Empfangslicht empfangen und basierend auf dem empfangenen Empfangslicht mittels des zumindest einen differentiellen Pixels ein differentielles Ausgangssignal erzeugen. Dabei kann das differentielle Ausgangssignal einen ersten Signalanteil und einen zweiten Signalanteil umfassen, wobei der erste und zweite Signalanteile über jeweils einen eigenen Ausgang ausgegeben und/oder über separate Leitungen übertragen werden.

Das Sendelicht kann durch einen mit dem optoelektronischen Empfänger gekoppelten und/oder gesteuerten Lichtsender erzeugt und in den Erfassungsbereich ausgesandt werden.

Das differentielle Pixel kann zumindest zwei Speicherelemente (d.h. Ladungsspeicher, Ladungstopf, engl. "charge well") umfassen, welche zeitlich voneinander getrennt angesteuert werden können und je nach Phase der Abstandsmessung zeitversetzt Empfangslicht (z.B. als elektrische Ladung) sammeln und speichern können. Die Speicherelemente können Kondensatoren umfassen. Der Zeitpunkt des Aussendens des Sendelichts und die Zeitpunkte der Ansteuerung der Speicherelemente können zeitlich aufeinander abgestimmt werden. Der Zeitversatz kann eingelernt und zu einem späteren Zeitpunkt in der Verarbeitungskette korrigiert werden, um eine genauere Messung zu ermöglichen. Die Speicherelemente können dann, gleichzeitig oder zeitversetzt, ausgelesen werden, um das differentielle Ausgangssignal zu erzeugen. Dieser Aufbau des differentiellen Pixels kann erlauben, die Anfälligkeit des optoelektronischen Empfängers gegenüber Umgebungslicht zu reduzieren, Rauschen in der Abstandsmessung zu reduzieren und den Dynamikbereich des optoelektronischen Empfängers verbessern.

Beispielsweise kann das differentielle Pixel ein erstes und zweites Speicherelement umfassen. Das erste Speicherelement kann ausgebildet sein, für die Zeitdauer jedes ausgesendeten Pulses des Sendelichts, also von dem Zeitpunkt des Aussendens des Sendelichts an bis zum Zeitpunkt des Endes des Aussendens des Sendlichts, Empfangslicht als elektrische Ladung zu sammeln und zu speichern (d.h. die den reflektierten oder remittierten Pulsen des Sendelichts entsprechende Ladungsmenge). Das zweite Speicherelement kann ausgebildet sein, von dem Zeitpunkt des Endes des Aussendens des Sendlichts an bis zum Zeitpunkt des Aussendens eines nachfolgenden Pulses des Sendelichts Empfangslicht zu sammeln und zu speichern. Der erste Signalanteil des differentiellen Ausgangssignals kann dann durch Auslesen des ersten Speicherelements des differentiellen Pixels erzeugt werden und der zweite Signalanteil des differentiellen Ausgangssignals kann durch Auslesen des zweiten Speicherelements des differentiellen Pixels erzeugt werden. Der erste und/oder der zweite Signalanteil des differentiellen Ausgangssignals können optional in einem (analogen) Speicher zwischengespeichert und dann gemeinsam ausgegeben werden.

Die Verarbeitungseinheit kann Komponenten zur Signalverarbeitung umfassen, wie beispielsweise zur Signalverstärkung und/oder Analog-zu-Digital-Wandlung.

Der optoelektronische Empfänger kann eine Steuerung umfassen, wie zum Beispiel einen Mikroprozessor oder einen Field Programmable Gate Array (FPGA), welche ausgebildet ist, den optoelektronischen Empfänger, und insbesondere die Verbindungseinheit, zu steuern. Die Steuerung kann beispielsweise in dem optoelektronischen Empfänger vorinstalliert sein, um generelle Funktionen des Pixelarrays und/oder der Verarbeitungseinheit zu steuern. Die Steuerung kann ausgebildet sein, ebenfalls die Verbindungseinheit zu steuern und beispielsweise eine Diagnose des optoelektronischen Empfängers zu implementieren. In anderen Worten kann eine bereits vorhandene Steuerung, die typischerweise für andere Zwecke eingesetzt wird, für die Implementierung der Diagnose des optoelektronischen Empfängers wiederverwendet werden, sodass keine zusätzliche Steuerung für die Implementierung der Diagnose des optoelektronischen Empfängers vorgesehen werden muss.

In dem optoelektronischen Empfänger können auch mehrere Signalgeneratoren vorhanden sein, also zum Beispiel zwei, drei, vier oder mehr Signalgeneratoren. Beispielsweise kann jeweils zumindest ein Signalgenerator für jede Spalte und/oder Zeile des Pixelarray vorgesehen sein. Jeder der Signalgeneratoren kann anders programmiert sein und beispielsweise ein anderes Referenzsignal ausgeben.

Gemäß einer Ausführungsform sind die Komponenten des optoelektronischen Empfängers, insbesondere der Signalgenerator, für eine Kalibrierung, und insbesondere initiale Kalibrierung, des optoelektronischen Empfängers ausgebildet und/oder vorinstalliert. Auf diese Weise können die Komponenten des optoelektronischen Empfängers für zwei verschiedene Zwecke und damit effizienter genutzt werden. Gleichzeitig können zusätzliche Hardware-Strukturen, die beispielsweise für die Bereitstellung des Referenzsignals notwendig gewesen wären, eingespart werden. So kann insgesamt die Effizienz und/oder Leistungsfähigkeit des optoelektronischen Empfängers, insbesondere im Hinblick auf seine funktionelle Sicherheit, erhöht werden. Insbesondere kann die Verwendbarkeit von herkömmlichen Empfängern für Sicherheitsanwendungen erreicht werden.

Gemäß einer Ausführungsform ist das Referenzsignal statisch oder veränderbar, und vorzugsweise veränderbar.

Gemäß einer Ausführungsform ist der Signalgenerator ausgebildet, während eines Diagnose-Durchlaufs (d.h. eines sogenannten "Sweeps") die Amplitude des Referenzsignals zu verändern. Auf diese Weise kann der optoelektronische Empfänger, und insbesondere die Verarbeitungseinheit, in einem Diagnose-Durchlauf über den gesamten Dynamikbereich des optoelektronischen Empfängers getestet werden, was den Grad an Diagnosedeckung erhöhen kann. Insbesondere können verschiedene Komponenten und komplexe Funktionen der Verarbeitungseinheit auf einfache und flexible Weise überprüft und/oder überwacht werden. Beispielsweise können Single-Ended-Sättigungskomparatoren (falls vorhanden), eine (analoge) korrelierte Doppelabtastungs("Correlated Double Sampling", CDS)-Funktion eines Verstärkers und seiner Schaltungen, Verstärkungsauswahlkomparatoren, verschiedene Verstärkungseinstellungen des Verstärkers und ein Analog-zu-Digital-Wandler ("analog-to-digital converter", ADC) über den gesamten Dynamikbereich bis zur Sättigung überprüft und/oder überwacht werden.

Gemäß einer Ausführungsform ist der Signalgenerator ausgebildet, in dem Diagnose-Durchlauf den gesamten Dynamikbereich des optoelektronischen Empfängers, bevorzugt einschließlich von Single-Ended-Sättigung und/oder Sättigung einer Analog-zu Digital-Wandlung, d.h. ADC-Sättigung, zu testen. Mit Single-Ended-Sättigung kann gemeint sein, dass die Amplitude des Referenzssignals einer Sättigung eines Speicherelements des differentiellen Pixels entspricht.

Gemäß einer Ausführungsform ist der Signalgenerator ausgebildet, während des Diagnose-Durchlaufs unterschiedliche Steigungen für die Änderung der Amplitude des Referenzsignals zu verwenden. Die Steigung, mit der auch eine Schrittweite gemeint sein kann, kann in Abhängigkeit von der Verstärkungseinstellung eines Verstärkers der Verarbeitungseinheit gewählt werden oder umgekehrt. Die Verwendung unterschiedlicher Steigungen bzw. unterschiedlicher Schrittweiten kann erlauben, eine dichtere Abtastung für schwache Signale (und z.B. höhere Signalverstärkung) und gleichzeitig einen großen Dynamikbereich für stärkere Signale (und z.B. niedrigere Signalverstärkung) bereitzustellen. In anderen Worten kann eine höhere Anzahl von Abtastungspunkten innerhalb eines bestimmten Signalbereichs erreicht werden. Zudem kann eine anwendungsspezifische Diagnose des optoelektronischen Empfängers ermöglicht werden. Alternativ oder zusätzlich können die Amplitude des Referenzsignals für den Start des Diagnose-Durchlaufs und die Amplitude des Referenzsignals für das Ende des Diagnose-Durchlaufs variabel (und insbesondere anwendungsspezifisch) gewählt werden.

Gemäß einer Ausführungsform umfasst das Pixelarray einen ersten Ausgang (beispielsweise ein Ausgangsterminal) für die Ausgabe eines ersten Signalanteils des differentiellen Ausgangssignals und einen (von dem ersten Ausgang separaten) zweiten Ausgang für die Ausgabe eines zweiten Signalanteils des differentiellen Ausgangssignals, wobei ein erster Eingang der Verbindungseinheit mit dem ersten Ausgang des Pixelarrays und ein zweiter Eingang der Verbindungseinheit mit dem zweiten Ausgang des Pixelarrays verbunden ist. Insbesondere kann der erste Eingang der Verbindungseinheit mit dem ersten Ausgang des Pixelarrays und der zweite Eingang der Verbindungseinheit mit dem zweiten Ausgang des Pixelarrays so, direkt oder indirekt, verbunden sein, dass der erste Signalanteil und der zweite Signalanteil des differentiellen Ausgangssignals des Pixelarrays als entsprechender erster Signalanteil und zweiter Signalanteil des differentiellen Eingangssignals in die Verbindungseinheit und folglich in die Verarbeitungseinheit eingespeist werden kann.

Gemäß einer Ausführungsform umfasst der optoelektronische Empfänger einen ersten Signalgenerator zur Erzeugung eines ersten Referenzsignals und einen zweiten Signalgenerator zur Erzeugung eines zweiten Referenzsignals, wobei die Verbindungseinheit mit dem ersten Ausgang des Pixelarrays, dem zweiten Ausgang des Pixelarrays, dem ersten Signalgenerator, dem zweiten Signalgenerator, einem ersten Eingang der Verarbeitungseinheit und einem zweiten Eingang der Verarbeitungseinheit verbunden ist und ausgebildet ist, wahlweise den ersten und zweiten Ausgang des Pixelarrays mit dem ersten beziehungsweise zweiten Eingang der Verarbeitungseinheit oder den ersten und zweiten Signalgenerator mit dem ersten beziehungsweise zweiten Eingang der Verarbeitungseinheit zu koppeln, sodass wahlweise der erste und zweite Signalanteil des differentiellen Ausgangssignal als der erste beziehungsweise der zweite Signalanteil des differentiellen Eingangssignals oder das erste und zweite Referenzsignal in die Verarbeitungseinheit zur Signalverarbeitung eingespeist werden kann. Damit kann gemeint sein, dass die Verbindungseinheit ausgebildet ist, entweder den ersten und zweiten Ausgang des Pixelarrays mit dem ersten beziehungsweise zweiten Eingang der Verarbeitungseinheit oder den ersten und zweiten Signalgenerator mit dem ersten beziehungsweise zweiten Eingang der Verarbeitungseinheit zu koppeln, sodass entweder der erste und zweite Signalanteil des differentiellen Ausgangssignal als der erste beziehungsweise der zweite Signalanteil des differentiellen Eingangssignals oder das erste und zweite Referenzsignal in die Verarbeitungseinheit zur Signalverarbeitung eingespeist werden kann.

In anderen Worten kann in einer ersten Kopplungseinstellung der erste und zweite Signalanteil des differentiellen Eingangssignals in die Verarbeitungseinheit zur Signalverarbeitung eingespeist werden und, im Unterschied dazu, in der anderen Kopplungseinstellung das erste und zweite Referenzsignal in die Verarbeitungseinheit zur Signalverarbeitung eingespeist werden. Beispielsweise kann der erste Eingang der Verbindungseinheit mit dem ersten Signalgenerator (für die Einspeisung des ersten Referenzsignals) verbunden sein und der zweite Eingang der Verbindungseinheit kann mit dem zweiten Signalgenerator (für die Einspeisung des zweiten Referenzsignals) verbunden sein. Die Verbindungseinheit kann ausgebildet sein, zum Zweck der Diagnose, insbesondere für die Aufnahme der Diagnosedaten, den ersten Signalgenerator mit dem ersten Eingang der Verarbeitungseinheit und den zweiten Signalgenerator mit dem zweiten Eingang der Verarbeitungseinheit in den bestimmten Zeitabständen zu koppeln. Ein erster Ausgang der Verbindungseinheit kann mit dem ersten Eingang der Verarbeitungseinheit und ein zweiter Ausgang der Verbindungseinheit kann mit dem zweiten Eingang der Verarbeitungseinheit verbunden sein.

Vorzugsweise ist das erste Referenzsignal von dem zweiten Referenzsignal verschieden, und weist beispielsweise eine andere Amplitude und/oder Polarität auf.

Gemäß einer Ausführungsform ist der erste Eingang der Verbindungseinheit sowohl mit dem ersten als auch mit dem zweiten Signalgenerator (für die Einspeisung des ersten bzw. zweiten Referenzsignals) verbunden und der zweite Eingang der Verbindungseinheit sowohl mit dem ersten als auch mit dem zweiten Signalgenerator (für die Einspeisung des ersten bzw. zweiten Referenzsignals) verbunden. Die Verbindungseinheit kann ausgebildet sein, zum Zweck der Diagnose, insbesondere für die Aufnahme der Diagnosedaten, den ersten Signalgenerator mit dem ersten Eingang der Verarbeitungseinheit und den zweiten Signalgenerator mit dem zweiten Eingang der Verarbeitungseinheit oder den ersten Signalgenerator mit dem zweiten Eingang der Verarbeitungseinheit und den zweiten Signalgenerator mit dem ersten Eingang der Verarbeitungseinheit zu koppeln. Die Verbindungseinheit ist vorzugsweise ausgebildet, zum Zweck der Diagnose (zum Beispiel für die Aufnahme der Diagnosedaten) abwechselnd den ersten Signalgenerator mit dem ersten Eingang der Verarbeitungseinheit und den zweiten Signalgenerator mit dem zweiten Eingang der Verarbeitungseinheit oder den ersten Signalgenerator mit dem zweiten Eingang der Verarbeitungseinheit und den zweiten Signalgenerator mit dem ersten Eingang der Verarbeitungseinheit zu koppeln. In anderen Worten kann zum Zweck der Diagnose entweder der erste Signalanteil des differentiellen Eingangssignals mit dem ersten Referenzsignal und der zweite Signalanteil des differentiellen Eingangssignals mit dem zweiten Referenzsignal oder der erste Signalanteil des differentiellen Eingangssignals mit dem zweiten Referenzsignal und der zweite Signalanteil des differentiellen Eingangssignals mit dem ersten Referenzsignal, vorzugsweise abwechselnd und/oder auf ein Steuersignal einer Steuerung hin, für die folgende Signalverarbeitung ersetzt werden. Durch diesen Aufbau des optoelektronischen Empfängers (und insbesondere durch die Verbindung der Eingänge der Verbindungseinheit jeweils sowohl zu dem ersten als auch zu dem zweiten Signalgenerator) und durch die abwechselnde Kopplung kann der Dynamikbereich (und vorzugsweise der volle Dynamikbereich) des optoelektronischen Empfängers mit geringerer Anzahl, beispielsweise der halben Anzahl, von Signalgeneratoreinstellungen (innerhalb eines Diagnose-Durchlaufs) abgedeckt bzw. überprüft werden.

Gemäß einer Ausführungsform umfasst die Verbindungseinheit einen ersten Multiplexer, umfassend einen ersten Eingang, welcher mit dem ersten Ausgang des Pixelarrays für die Einspeisung des ersten Signalanteils des differentiellen Ausgangssignals des Pixelarrays als den ersten Signalanteil des differentiellen Eingangssignals verbunden ist, einen zweiten Eingang, welcher mit dem ersten Signalgenerator für die Einspeisung des ersten Referenzsignals verbunden ist, einen dritten Eingang, welcher mit dem zweiten Signalgenerator für die Einspeisung des zweiten Referenzsignals verbunden ist, und einen Ausgang für die (vorzugsweise gesteuerte) Ausgabe des ersten Referenzsignals, des zweiten Referenzsignals oder des ersten Signalanteils des differentiellen Eingangssignals. Ferner umfasst die Verbindungseinheit einen zweiten Multiplexer, umfassend einen ersten Eingang, welcher mit dem zweiten Ausgang des Pixelarrays für die Einspeisung des zweiten Signalanteils des differentiellen Ausgangssignals des Pixelarrays als den zweiten Signalanteil des differentiellen Eingangssignals verbunden ist, einen zweiten Eingang, welcher mit dem ersten Signalgenerator für die Einspeisung des ersten Referenzsignals verbunden ist, einen dritten Eingang, welcher mit dem zweiten Signalgenerator für die Einspeisung des zweiten Referenzsignals verbunden ist, und einen Ausgang für die (vorzugsweise gesteuerte) Ausgabe des ersten Referenzsignals, des zweiten Referenzsignals oder des zweiten Signalanteils des differentiellen Eingangssignals. Der erste Multiplexer und der zweite Multiplexer sind ausgebildet, zum Zweck der Diagnose, insbesondere für die Aufnahme der Diagnosedaten, gleichzeitig das erste Referenzsignal und das zweite Referenzsignal, vorzugsweise auf das Signal der Steuerung hin, auszugeben, wobei der erste Multiplexer das erste Referenzsignal und der zweite Multiplexer das zweite Referenzsignal ausgibt oder umgekehrt, wobei sich der erste Multiplexer und der zweite Multiplexer vorzugsweise bei der Ausgabe des ersten Referenzsignals und des zweiten Referenzsignals abwechseln. Der erste und der zweite Multiplexer können auch mehr als drei Eingänge und mehr als einen Ausgang umfassen. Zudem können auch mehr als zwei Multiplexer, also zum Beispiel auch drei, vier oder mehr Multiplexer vorhanden sein.

Gemäß einer Ausführungsform definieren das erste Referenzsignal und das zweite Referenzsignal an den Ausgängen der Verbindungseinheit und/oder an den Eingängen der Verarbeitungseinheit in Bezug auf oder durch die Verarbeitungseinheit ein differentielles Referenzsignal, wobei das differentielle Referenzsignal je nach Kopplungseinstellung der Verbindungseinheit eine positive oder eine negative Polarität aufweist. Gemäß einer Ausführungsform ist die Verbindungseinheit ausgebildet, die Polarität des, in die Verarbeitungseinheit eingespeisten, differentiellen Referenzsignals zu invertieren. Vorzugsweise invertiert die Verbindungseinheit die Polarität des, in die Verarbeitungseinheit eingespeisten, differentiellen Referenzsignals mehrfach während eines Diagnose-Durchlaufs.

Gemäß einer Ausführungsform sind das erste und/oder das zweite Referenzsignal statisch oder veränderbar.

Gemäß einer Ausführungsform sind der erste und/oder zweite Signalgenerator ausgebildet, während eines Diagnose-Durchlaufs die Amplitude des ersten und/oder zweiten Referenzsignals zu verändern. Vorzugsweise sind der erste und der zweite Signalgenerator ausgebildet, während des Diagnose-Durchlaufs die Amplitude des ersten Referenzsignals und die Amplitude des zweiten Referenzsignals abwechselnd zu verändern, d.h. das eine Referenzsignal wird verändert während das andere vorerst konstant bleibt, um dann in der nächsten Runde verändert zu werden.

Beispielsweise kann die Verbindungseinheit erlauben, durch Umschaltung in der Kopplung mit dem ersten oder dem zweiten Signalgenerator die Polarität des eingespeisten differentiellen Referenzsignals zu vertauschen. Auf diese Weise kann in einem Diagnose-Durchlauf der gesamte Dynamikbereich beider Polaritäten mit kleinerer Anzahl an erzeugten Referenzsignalwerten, und zum Beispiel nur mit der halben Anzahl an erzeugten Referenzsignalwerten, überprüft bzw. abgedeckt werden. Die Signalgeneratoren müssen, jeweils für sich allein gesehen, nicht den gesamten Differenzbereich abdecken, da der Polaritätstausch bzw. die Polaritätsumschaltung die Prüfung eines Referenzsignals mit invertierter Polarität ermöglicht, ohne dass (bezogen auf jeden einzelnen Signalgenerator) der gesamte Dynamikbereich beider Polaritäten durchlaufen werden muss.

Gemäß einer Ausführungsform sind der erste und/oder zweite Signalgenerator ausgebildet, in dem Diagnose-Durchlauf den gesamten Dynamikbereich des optoelektronischen Empfängers, bevorzugt einschließlich von Single-Ended-Sättigung und/oder ADC-Sättigung zu testen.

Gemäß einer Ausführungsform sind der erste und/oder zweite Signalgenerator ausgebildet, während des Diagnose-Durchlaufs unterschiedliche Steigungen für die Änderung der Amplitude des ersten und/oder zweiten Referenzsignals zu verwenden. Insbesondere kann eine Steuerung vorhanden sein, die den ersten und/oder zweiten Signalgenerator so steuert, dass sich die unterschiedlichen Steigungen für die Änderung der Amplitude des ersten und/oder zweiten Referenzsignals ergeben. Durch Auswahl der Startwerte und Steigungen kann es ermöglicht sein, dass einer der beiden Signalgeneratoren für den Diagnose-Durchlauf nicht variiert werden muss, was den Diagnose-Durchlauf vereinfachen kann.

Gemäß einer Ausführungsform umfasst die Verarbeitungseinheit zumindest einen Verstärker, insbesondere einen Differenzverstärker, zur Signalverstärkung. Der Verstärker kann einen ersten Eingang und einen zweiten Eingang umfassen, wobei der erste Eingang des Verstärkers mit dem Ausgang des ersten Multiplexers für die Einspeisung des ersten Referenzsignals, des zweiten Referenzsignals oder des ersten Signalanteils des differentiellen Eingangssignals verbunden sein kann, und wobei der zweite Eingang des Verstärkers mit dem Ausgang des zweiten Multiplexers für die Einspeisung des ersten Referenzsignals, des zweiten Referenzsignals oder des zweiten Signalanteils des differentiellen Eingangssignals verbunden sein kann. Der Verstärker kann ein programmierbarer Differenzverstärker sein. Der Verstärker kann ein programmierbarer Differenzverstärker mit differentiellem Ausgang sein. Der Verstärker kann ausgebildet sein, analoge korrelierte Doppelabtastung ("Correlated Double Sampling", CDS), Verstärker-Offset-Auslöschung ("amplifier offset cancellation") und/oder Pixel-Zurücksetzungs-Spannungssubtraktion ("pixel reset voltage subtraction") bereitzustellen.

Gemäß einer Ausführungsform umfasst die Verarbeitungseinheit zumindest einen Verstärkungsauswahlkomparator, welcher mit dem Verstärker verbunden ist und ausgebildet ist, das differentielles Eingangssignal oder das Referenzsignal, insbesondere das differentielle Referenzsignal, mit zumindest einem Verstärkungsauswahlschwellenwert zu vergleichen, sodass die Verstärkung des Verstärkers basierend auf einem Ausgangssignal des Verstärkungsauswahlkomparators ausgewählt werden kann. Der Verstärkungsauswahlkomparator kann ein volldifferentieller Verstärkungsauswahlkomparator sein. Die auswählbaren Verstärkungsfaktoren können programmierbar sein. Die Anzahl der Verstärkungsauswahlkomparatoren kann von der zur Auswahl stehenden Verstärkungsfaktoren abhängen und mit diesen skalieren. Der zumindest eine Verstärkungsauswahlschwellenwert kann kalibrationsabhängig sein und/oder (z.B. durch eine Steuerung) programmiert werden. Der Verstärkungsauswahlschwellenwert kann beispielsweise mittels eines DAC erzeugt werden.

Beispielsweise kann die Verarbeitungseinheit zumindest einen ersten und einen zweiten Verstärkungsauswahlkomparator (beispielsweise zwei volldifferentielle Verstärkungsauswahlkomparatoren) umfassen, welche mit dem Verstärker verbunden sind und ausgebildet sind, das differentielle Eingangssignal oder das differentielle Referenzsignal mit einem ersten, insbesondere negativen, Verstärkungsauswahlschwellenwert und einem zweiten, insbesondere positiven, Verstärkungsauswahlschwellenwert zu vergleichen, sodass die Verstärkung des Verstärkers basierend auf einem Ausgangssignal der Verstärkungsauswahlkomparatoren ausgewählt werden kann. Die absoluten Beträge des ersten und zweiten Verstärkungsauswahlschwellenwertes können gleich oder verschieden voneinander sein. Vorzugsweise sind die Beträge gleich. Mit anderen Worten kann für jede Polarität eines Verstärkungsauswahlschwellenwertes (bzw. seines Betrags) ein Verstärkungsauswahlkomparator vorhanden sein. Auf diese Weise kann ein Unterschreiten des Verstärkungsauswahlschwellenwertes mit negativer Polarität und ein Überschreiten des Verstärkungsauswahlschwellenwertes mit positiver Polarität erkannt werden, um in der Folge den Verstärkungsfaktor umzuschalten. Die Signalanteile des differentiellen Eingangs- bzw. des differentiellen Referenzsignals können an die Verstärkungsauswahlkomparatoren vertauschbar herangeführt werden, d.h. in einen Eingang eines jeden Verstärkungsauswahlkomparators kann der erste Signalanteil des differentiellen Eingangs- oder Referenzsignals und in einen anderen Eingang des Verstärkungsauswahlkomparators der zweite Signalanteil des differentiellen Eingangs- oder Referenzsignals eingespeist werden oder umgekehrt. Auf diese Weise kann, insbesondere bei einer Vertauschung der Polarität des differentiellen Referenzsignals, der gleiche Verstärkungsauswahlschwellenwert verwendet werden.

Gemäß einer Ausführungsform umfasst die Verarbeitungseinheit ferner einen Analog-zu-Digital-Wandler ("analog-to-digital converter", ADC). Der Verstärker kann ausgangsseitig mit dem Analog-zu-Digital-Wandler (direkt oder indirekt) verbunden sein. In anderen Worten können die Verbindungseinheit mit den zwei Multiplexern, der Verstärker und der Analog-zu-Digital-Wandler in Reihe geschaltet sein. Der Analog-zu-Digital-Wandler kann einen Analog-zu-Digital-Wandler mit differentiellem Eingang umfassen.

Gemäß einer Ausführungsform umfasst das Pixelarray eine Vielzahl von differentiellen Pixeln, wobei die Vielzahl von differentiellen Pixeln in Spalten und/oder Zeilen angeordnet sind. Das Pixelarray kann beispielsweise 512 oder 1024 Spalten und 512 beziehungsweise 1024 Zeilen an Pixeln aufweisen. Beispielsweise kann für jedes Pixel des Pixelarray jeweils ein erster Ausgang für die Ausgabe eines ersten Signalanteils eines differentiellen Ausgangssignals (des jeweiligen Pixels) und jeweils ein zweiter Ausgang für die Ausgabe eines zweiten Signalanteils des differentiellen Ausgangssignals (des jeweiligen Pixels) vorhanden sein. Vorzugsweise ist für jede Spalte und/oder Zeile des Pixelarrays jeweils ein erster Ausgang für die Ausgabe eines ersten Signalanteils eines differentiellen Ausgangssignals (der jeweiligen Spalte oder Zeile) und ein jeweils ein zweiter Ausgang für die Ausgabe eines zweiten Signalanteils des differentiellen Ausgangssignals (der jeweiligen Spalte oder Zeile) vorhanden. Dabei können jeweils eine Verbindungseinheit und eine Verarbeitungseinheit für jede einzelne Spalte und/oder Zeile vorgesehen sein. Alternativ können jeweils eine Verbindungseinheit und eine Verarbeitungseinheit für mehrere Spalten und/oder Zeilen zusammengenommen und/oder nur für bestimmte Spalten und/oder Zeilen vorgesehen sein. In anderen Worten können die Verbindungseinheit und die Verarbeitungseinheit, und insbesondere der Verstärker, von mehreren Spalten und/oder Zeilen des Pixelarray geteilt werden, was eine effiziente Nutzung der Hardware-Komponenten erlauben kann. Das Vorsehen von jeweils einer Verbindungseinheit und einer Verarbeitungseinheit nur für bestimmte Spalten und/oder Zeilen des Pixelarrays kann erlauben, bei einer Diagnose des optoelektronischen Empfängers gezielt nur die von den bestimmten Spalten und/oder Zeilen des Pixelarrays erzeugten echten (Live-)Messdaten mit den Diagnosedaten zu ersetzen. Vorzugsweise werden Spalten und/oder Zeilen des Pixelarrays für die Durchführung der Diagnose ausgewählt, welche ohnehin für die Abstandsmessung ungeeignet sind, also zum Beispiel Spalten und/oder Zeilen an den Rändern das Pixelarrays, welche unter Umständen nicht ausreichend beleuchtet werden können. Ferner können auch andere Testbilder oder Testdaten, die der Überwachung anderer Strukturen des optoelektronischen Empfängers dienen, mit den Diagnosedaten ersetzt werden. Vorzugsweise wird das in die Verbindungseinheit und/oder Verarbeitungseinheit einer Spalte und/oder Zeile eingespeiste Referenzsignal während des Auslesens der Spalte und/oder Zeile (durch Umprogrammierung des zugehörigen Signalgenerators) verändert. Dadurch können noch dynamischere Diagnosedaten erhalten werden.

Gemäß einer Ausführungsform wird dasselbe Referenzsignal für mehrere Spalten und/oder Zeilen verwendet. Die Verwendung desselben Referenzsignals für mehrere Spalten und/oder Zeilen kann eine Mittelwertbildung von mehreren Messungen (d.h. mehrerer Spalten und/oder Zeilen) ermöglichen, was das Rauschen vor der Datenverarbeitung reduzieren kann. Des Weiteren kann die Verwendung desselben Referenzsignals für mehrere Zeilen und/oder Spalten mit dem hierin beschriebenen Polaritätstausch kombiniert werden, z.B. für jede zweite Zeilen des Pixelarrays. Die Verwendung desselben Referenzsignals für mehrere Zeilen und/oder Spalten kann auch relevant sein, wenn Hardware-Ressourcen, wie zum Beispiel ein Verstärker, zwischen mehreren Spalten des Pixelarrays geteilt werden und/oder die Bildbreite des Diagnosebildes geringer ist als die Anzahl der Spalten.

Gemäß einer Ausführungsform werden bei einer Überwachung zumindest einer anderen Komponente des optoelektronischen Empfängers erzeugte Testdaten durch die Diagnosedaten ersetzt. In der Folge kann die Ausgabe und/oder Weiterverarbeitung der erzeugten Daten effizienter sein.

Gemäß einer Ausführungsform werden die Diagnosedaten und echte (Live-)Messdaten in zumindest einem kombinierten Ausgabebild zusammengeführt (und ausgegeben). Vorzugsweise werden während eines Diagnose-Durchlaufs mehrere kombinierte Ausgabebilder (z.B. ein Stapel an Ausgabebildern) erzeugt (und ausgegeben). Zum Beispiel können bei der Erzeugung der mehreren kombinierten Ausgabebilder unterschiedliche Start und/oder Endpunkte und/oder unterschiedliche Schrittgrößen des eingespeisten Referenzsignals berücksichtigt und dadurch eine bessere Abdeckung des Eingangs-/Ausgangssignals und/oder eine anwendungsspezifischere Abdeckung erreicht werden. Vorzugsweise werden während des Diagnose-Durchlaufs aufgenommene Diagnosedaten stückweise an die echten Messdaten angefügt, um die mehreren kombinierten Ausgabebilder zu erzeugen (und auszugeben). Durch die Erzeugung mehrerer Ausgabebilder kann die Weiterverarbeitung der Ausgabebilder erleichtert werden, insbesondere eine schrittweise Weiterverarbeitung realisiert werden.

Die Weiterverarbeitung bzw. Analyse der Diagnosedaten in den Ausgabebildern durch einen nachgelagerten Prozessor, FPGA und/oder SoC, also z.B. die hier erwähnte Datenverarbeitungseinheit, kann dadurch frühzeitig starten und zumindest zum Teil bereits dann erfolgen während die Datenverarbeitungseinheit ohnehin noch auf die übrigen Ausgabebilder und damit auf den vollständigen Messdatensatz warten muss. Nach Erhalt des vollständigen Messdatensatzes kann dann die Tiefenkarte aus den Rohdaten berechnet werden kann. Dadurch wird die Rechenlast und ggf. Beanspruchung von Speicherbandbreite durch die Datenverarbeitungseinheit zeitlich besser verteilt und die Auswertung der Diagnosedaten reduziert nicht die verfügbare Rechenleistung für z.B. die Erstellung der Tiefenkarte durch die Datenverarbeitungseinheit.

Ein Vorteil der Erzeugung von kombinierten Ausgabebildern ist, dass die gesamte benötigte Zeit, die der optoelektronische Empfänger z.B. für jede Abstandsmessung bzw. pro Frame aktiv ist und damit Strom verbraucht, verkürzt werden kann, da zusätzlicher Zeitaufwand für das Vorbereiten und/oder Starten der Bildaufnahme des Diagnosebildes entfällt, da ja lediglich das Ausgabebild für die echten Messdaten (Live-Messdaten-Bild) durch z.B. zusätzliche Zeilen von Diagnosedaten vergrößert wird. Dieser zeitliche Offset kann daher entfallen.

Gemäß einer Ausführungsform umfasst der optoelektronischen Empfänger zusätzlich zumindest ein Dunkelpixel, welches ausgebildet ist, ein Dunkelsignal zu erzeugen und auszugeben. Das Dunkelpixel kann in dem Pixelarray integriert oder separat von dem Pixelarray sein. Das Dunkelpixel kann durch eine Metallisierungsschicht abgedeckt sein. Die Diagnosedaten und/oder dem Dunkelsignal entsprechende Dunkelpixeldaten und/oder die echten (Live-)Messdaten können in zumindest einem kombinierten Ausgabebild zusammengeführt (und ausgegeben) werden. Vorzugsweise werden die Dunkelpixeldaten, Diagnosedaten und echte Messdaten in zumindest einem kombinierten Ausgabebild zusammengeführt (und ausgegeben). Vorzugsweise werden während eines Diagnose-Durchlaufs aufgenommene Diagnosedaten stückweise an die echten Messdaten und die Dunkelpixeldaten angefügt.

Der optoelektronische Empfänger kann ferner eine (programmierbare) Datenvorverarbeitungseinheit umfassen, welche ausgebildet ist, ein digitales Ausgangssignal des Analog-zu-Digital-Wandlers des optoelektronischen Empfängers zu verarbeiten, und insbesondere eine Normalisierung verschiedener Verstärkungseinstellungen eines Verstärkers der Verarbeitungseinheit und/oder eine Formatkonvertierung eines digitalen Ausgangssignals des Analog-zu-Digital-Wandlers bereitzustellen, und vorzugsweisen eine Formatkonvertierung digitaler Daten basierend auf dem digitalen Ausgangssignals des Analog-zu-Digital-Wandlers vor Übertragung an die nachgeschaltete Datenverarbeitungseinheit bereitzustellen. Es versteht sich, dass mittels der hierin beschriebenen Vorgehensweisen und des Aufbaus und der Konfiguration des optoelektronischen Empfängers auch Fehler in der Datenvorverarbeitungseinheit während des Betriebs des optoelektronischen Empfängers erkannt werden können, da sich z.B. von der Datenvorverarbeitungseinheit fehlerhaft vorverarbeitete Diagnosedaten von erwartungsgemäß vorverarbeiteten Diagnosedaten unterscheiden können.

Weiterer Gegenstand der Erfindung ist ein optoelektronischer Sensor, insbesondere ein optoelektronischer Sensor für Abstandsmessung mittels (Licht-)Laufzeitverfahren, bevorzugt zur Anwendung in einer Industrieanlage und/oder für Sicherheitsanwendungen, umfassend zumindest einen hierin beschriebenen optoelektronischen Empfänger und einen (insbesondere optoelektronischen) Lichtsender.

Der optoelektronische Sensor kann eine Stromversorgung umfassen.

Der optoelektronische Sensor kann einen Laserscanner oder ein (3D-)Kamerasystem für Abstandsmessung mittels (Licht-)Laufzeitverfahren umfassen.

Der Lichtsender kann beispielsweise zumindest einen Laserstrahl aussenden. Der Lichtsender kann ausgebildet sein, Sendelicht in einen Erfassungsbereich in einer Industrieanlage auszusenden. Das Sendelicht kann dann von dem Erfassungsbereich, und insbesondere von Gegenständen in dem Erfassungsbereich, reflektiert und/oder remittiert werden und als zu dem optoelektronischen Empfänger zurückgeworfenes Empfangslicht von dem optoelektronischen Empfänger empfangen werden.

Gemäß einer Ausführungsform umfasst der optoelektronische Sensor ferner eine Datenverarbeitungseinheit, welche mit der Datenvorerarbeitungseinheit des optoelektronischen Empfängers verbunden sein kann, um ein vorverarbeitetes Signal zu empfangen.

Vorzugsweise handelt es sich bei dem optoelektronischen Sensor um einen Sicherheitssensor.

Weiterer Gegenstand der Erfindung ist die Verwendung eines hierin beschriebenen optoelektronischen Empfängers für Abstandsmessung mittels Laufzeitverfahren.

Weiterer Gegenstand der Erfindung ist ein Verfahren zur Betriebsüberwachung eines hierin beschriebenen optoelektronischen Empfängers, insbesondere für Abstandsmessung mittels (Licht-)Laufzeitverfahren, umfassend Erzeugen zumindest eines Referenzsignals, Ausgeben eines basierend auf empfangenem Empfangslicht erzeugten differentiellen Ausgangssignals und wahlweises Einspeisen des differentiellen Ausgangssignals als differentielles Eingangssignal oder des Referenzsignals in die Verarbeitungseinheit zur Signalverarbeitung. Das Referenzsignal wird zum Zweck der Diagnose, insbesondere für die Aufnahme von Diagnosedaten, in bestimmten Zeitabständen, und vorzugsweise mit der gleichen Aufnahmerate wie die Abstandsmessung und/oder am Ende jeder Beleuchtungsphase der Abstandsmessung, in die Verarbeitungseinheit eingespeist.

Es versteht sich, dass das bezüglich des erfindungsgemäßen optoelektronischen Empfängers Beschriebene auch für den optoelektronischen Sensor, die Verwendung des optoelektronischen Empfängers und das Verfahren gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1: eine schematische Darstellung eines optoelektronischen Sensors;
- Fig. 2: eine graphische Darstellung mittels eines optoelektronischen Sensors aufgenommener Diagnosedaten;
- Fig. 3: eine graphische Darstellung mittels eines optoelektronischen Sensors aufgenommener Diagnosedaten, die Daten von Dunkelpixeln beinhalten;
- Fig. 4: eine graphische Darstellung verschiedener Verstärkungen;
- Fig. 5: eine weitere graphische Darstellung der Diagnosedaten aus Fig 3.

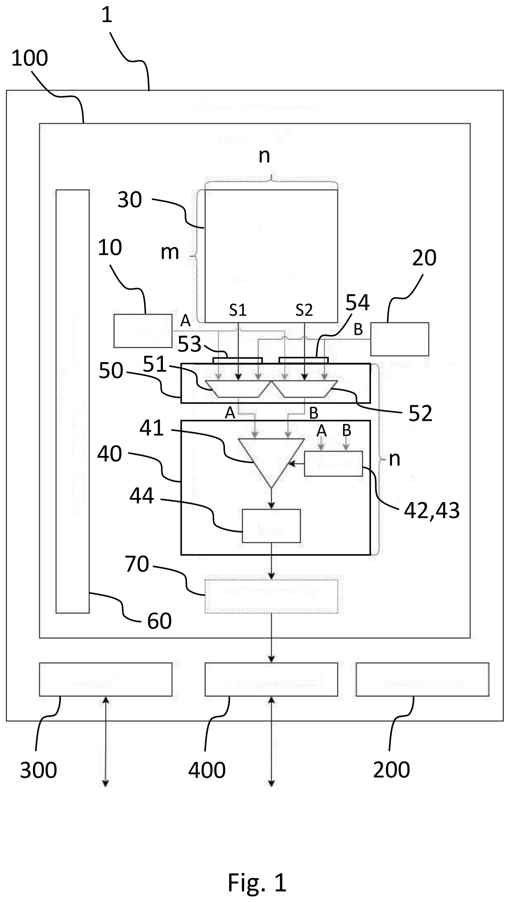

Der in Fig.1 dargestellte optoelektronische Sensor 1, insbesondere für Abstandsmessung mittels (Licht-)Laufzeitverfahren und vorzugsweise zur Anwendung in einer Industrieanlage und/oder für Sicherheitsanwendungen, umfasst einen optoelektronischen Empfänger 100, einen Lichtsender 200, eine Stromversorgung 300 und eine Datenverarbeitungseinheit 400.

Der Lichtsender 200 in Fig. 1 kann ausgebildet sein, Sendelicht in einen Erfassungsbereich in einer Industrieanlage auszusenden. Der Lichtsender 200 kann beispielsweise ausgebildet sein, in Pulsen zumindest einen Laserstrahl auszusenden. Vorzugsweise wird das Sendelicht diffus und/oder als Beleuchtungsfeld abgestrahlt. Das von dem Lichtsender 200 ausgesendete Sendelicht kann von dem Erfassungsbereich, und insbesondere von Objekten in dem Erfassungsbereich, reflektiert oder remittiert (d.h. diffus reflektiert) werden und als Empfangslicht zu dem optoelektronischen Empfänger 100 gelangen.

Der optoelektronische Empfänger 100, wie er in Fig. 1 gezeigt ist, umfasst einen ersten Signalgenerator 10 zur Erzeugung eines ersten Referenzsignals A und einen zweiten Signalgenerator 20 zur Erzeugung eines zweiten Referenzsignals B. Die Signalgeneratoren 10, 20 können Digital-zu-Analog-Wandler (DAC) umfassen. Die Signalgeneratoren 10, 20 können beispielsweise für eine initiale Kalibrierung des optoelektronischen Sensors 1 vorhanden und/oder vorinstalliert sein.

Der optoelektronischen Empfänger 100 in Fig. 1 umfasst ferner ein Pixelarray 30, welches eine Vielzahl von differentiellen Pixeln umfasst, wobei die Vielzahl von differentiellen Pixeln in n Spalten und m Zeilen angeordnet sein können. Das Pixelarray kann beispielsweise 512 oder 1024 Spalten und 512 beziehungsweise 1024 Zeilen an Pixeln aufweisen. Das Pixelarray 30 kann ferner zumindest einen Dunkelpinkel aufweisen.

Das Pixelarray 30 des optoelektronischen Empfängers 100, wie er in Fig. 1 gezeigt ist, kann ausgebildet sein, basierend auf dem empfangenem Empfangslicht pro Pixel, pro Zeile oder pro Spalte, und vorzugsweise pro Spalte, ein differentielles Ausgangssignal zu erzeugen und auszugeben. Anhand des differentiell Ausgangssignals kann beispielsweise eine Abstandsmessung mittels (Licht-)Laufzeitverfahren erfolgen. Wie in Fig. 1 dargestellt kann das differentielle Ausgangssignal einen ersten Signalanteil S1 und einen zweiten Signalanteil S2 umfassen. Das Pixelarray 30 kann pro Spalte einen ersten Ausgang für die Ausgabe des ersten Signalanteils S1 des differentiellen Ausgangssignals und pro Spalte einen (von dem ersten Ausgang separaten) zweiten Ausgang für die Ausgabe des zweiten Signalanteils S2 des differentiellen Ausgangssignals umfassen. Wie in Figur. 1 dargestellt können die pro Spalte ausgegebenen Signalanteile S1, S2 des differentiell Ausgangssignals über separate Leitungen übertragen werden.

Der optoelektronische Empfänger 100 in Fig. 1 umfasst ferner zumindest eine Verarbeitungseinheit 40 zur Signalverarbeitung und zumindest eine Verbindungseinheit 50. Wie in Fig. 1 dargestellt ist ein erster Eingang 53 der Verbindungseinheit 50 mit dem ersten Ausgang des Pixelarrays 30, mit dem ersten Signalgenerator 10 und mit dem zweiten Signalgenerator 20 verbunden. Ein zweiter Eingang 54 der Verbindungseinheit 50 ist mit dem zweiten Ausgang des Pixelarrays 30, mit dem ersten Signalgenerator 10 und mit dem zweiten Signalgenerator 20 verbunden. Der erste Eingang 53 der Verbindungseinheit 50 in Fig. 1 ist mit dem ersten Ausgang des Pixelarrays 30 und der zweite Eingang 54 der Verbindungseinheit 50 mit dem zweiten Ausgang des Pixelarrays 30 so, direkt oder indirekt, verbunden, dass der erste Signalanteil S1 und der zweite Signalanteil S2 des differentiellen Ausgangssignals des Pixelarrays 30 als entsprechender erster Signalanteil S1 und zweiter Signalanteil S2 eines differentiellen Eingangssignals in die Verbindungseinheit 50 und folglich in die Verarbeitungseinheit 40 eingespeist werden kann. Ein erster Ausgang der Verbindungseinheit 50 in Fig. 1 ist mit einem ersten Eingang der Verarbeitungseinheit 40 verbunden. Ein zweiter Ausgang der Verbindungseinheit 50 in Fig. 1 ist mit einem zweiten Eingang der Verarbeitungseinheit 40 verbunden.

Die Verbindungseinheit 50 in Fig. 1 ist ausgebildet, wahlweise den ersten und zweiten Ausgang des Pixelarrays 30 mit dem ersten beziehungsweise zweiten Eingang der Verarbeitungseinheit 40 oder den ersten und zweiten Signalgenerator 10, 20 mit dem ersten beziehungsweise zweiten Eingang der Verarbeitungseinheit 40 zu koppeln, sodass wahlweise der erste und zweite Signalanteil des differentiellen Ausgangssignals S1, S2 als der erste beziehungsweise zweite Signalanteil des differentiellen Eingangssignals oder das erste und zweite Referenzsignal A, B erzeugt durch die Signalgeneratoren 10, 20 in die Verarbeitungseinheit 40 zur Signalverarbeitung eingespeist werden kann. In anderen Worten kann in einer ersten Kopplungseinstellung der erste und zweite Signalanteil des differentiellen Eingangssignals S1, S2 in die Verarbeitungseinheit 40 zur Signalverarbeitung eingespeist werden und, im Unterschied dazu, in einer anderen, zweiten Kopplungseinstellung das erste und zweite Referenzsignal A, B in die Verarbeitungseinheit 40 zur Signalverarbeitung eingespeist werden. In Fig. 1 ist der optoelektronische Empfänger 100 in einer zweiten Kopplungseinstellung während der Aufnahme von Diagnosedaten gezeigt.

Die Verbindungseinheit 50 in Fig. 1 kann ausgebildet sein, zum Zweck der Diagnose, insbesondere für die Aufnahme von Diagnosedaten, den ersten Signalgenerator 10 mit dem ersten Eingang der Verarbeitungseinheit 40 und den zweiten Signalgenerator 20 mit dem zweiten Eingang der Verarbeitungseinheit 40 in bestimmten Zeitabständen, und vorzugsweise mit der gleichen Aufnahmerate wie die Abstandsmessung und/oder am Ende jeder Beleuchtungsphase der Abstandsmessung, zu koppeln.

Der optoelektronische Empfänger 100 in Fig. 1 umfasst ferner eine Steuerung 60, wie zum Beispiel einen Mikroprozessor, einen (einfacheren) programmierbaren Zustandsautomaten, oder einen Field Programmable Gate Array (FPGA), welche ausgebildet ist, den optoelektronischen Empfänger 100 zu steuern. Die Steuerung 60 kann beispielsweise in dem optoelektronischen Empfänger 100 vorinstalliert sein, um generelle Funktionen des Pixelarrays 30 und/oder der Verarbeitungseinheit 40 zu steuern. Die Steuerung 60 kann ausgebildet sein, ebenfalls die Verbindungseinheit 50 zu steuern und die Diagnose des optoelektronischen Empfängers 100 zu implementieren.

Wie in Fig. 1 dargestellt umfasst die Verbindungseinheit 50 einen ersten Multiplexer 51, welcher zumindest einen ersten Eingang, einen zweiten Eingang, einen dritten Eingang und einen Ausgang umfasst. Der erste Eingang des ersten Multiplexers 51 in Fig. 1 ist mit dem ersten Ausgang des Pixelarrays 30 für die Einspeisung des ersten Signalanteils S1 des differentiellen Ausgangssignals des Pixelarrays 30 als den ersten Signalanteil des differentiellen Eingangssignals verbunden. Der zweite Eingang des ersten Multiplexers 51 in Fig. 1 ist mit dem ersten Signalgenerator 10 für die Einspeisung des ersten Referenzsignals A verbunden. Der dritte Eingang des ersten Multiplexers 51 in Fig. 1 ist mit dem zweiten Signalgenerator 20 für die Einspeisung des zweiten Referenzsignals B verbunden. Über den Ausgang des ersten Multiplexers 51 in Fig. 1 kann, vorzugsweise gesteuert von der Steuerung 60, wahlweise das erste Referenzsignal A, das zweite Referenzsignal B oder der erste Signalanteil S1 des differentiellen Eingangssignals ausgegeben und über eine separate Leitung zu dem ersten Eingang der Verarbeitungseinheit 40 übertragen werden.

Die Verbindungseinheit 50 in Fig. 1 umfasst ferner einen zweiten Multiplexer 52, welcher zumindest einen ersten Eingang, einen zweiten Eingang, einen dritten Eingang und einen Ausgang umfasst. Der erste Eingang des zweiten Multiplexers 52 in Fig. 1 ist mit dem zweiten Ausgang des Pixelarrays 30 für die Einspeisung des zweiten Signalanteils S2 des differentiellen Ausgangssignals des Pixelarrays 30 als den zweiten Signalanteil des differentiellen Eingangssignals verbunden. Der zweite Eingang des zweiten Multiplexers 52 in Fig. 1 ist mit dem ersten Signalgenerator 10 für die Einspeisung des ersten Referenzsignals A verbunden. Der dritte Eingang des zweiten Multiplexers 52 in Fig. 1 ist mit dem zweiten Signalgenerator 20 für die Einspeisung des zweiten Referenzsignals B verbunden. Über den Ausgang des zweiten Multiplexers 52 in Fig. 1 kann, vorzugsweise gesteuert von der Steuerung 60, wahlweise das erste Referenzsignal A, das zweite Referenzsignal B oder der zweite Signalanteil S2 des differentiellen Eingangssignals ausgegeben und über eine separate Leitung zu dem zweiten Eingang der Verarbeitungseinheit 40 übertragen werden.

Der erste und der zweite Multiplexer 51, 52 können auch jeweils mehr als drei Eingänge und mehr als einen Ausgang umfassen. Zudem können auch mehr als zwei Multiplexer, also zum Beispiel auch drei, vier oder mehr Multiplexer vorhanden sein.

Der erste Multiplexer 51 und der zweite Multiplexer 52 können ausgebildet sein, zum Zweck der Diagnose, insbesondere für die Aufnahme der Diagnosedaten, gleichzeitig das erste Referenzsignal A und das zweite Referenzsignal B, vorzugsweise gesteuert von der Steuerung 60, auszugeben, wobei der erste Multiplexer 51 das erste Referenzsignal A und der zweite Multiplexer 52 das zweite Referenzsignal B ausgibt oder umgekehrt, wobei sich der erste Multiplexer 51 und der zweite Multiplexer 52 vorzugsweise bei der Ausgabe des ersten Referenzsignals A und des zweiten Referenzsignals B abwechseln.

Das erste und zweite Referenzsignal A, B können an den Ausgängen der Verbindungseinheit 50 und/oder an den Eingängen der Verarbeitungseinheit 40 in Bezug auf oder durch die Verarbeitungseinheit 40 ein differentielles Referenzsignal (B - A oder A - B je nach Kopplungseinstellung der Verbindungseinheit 50) definieren. Das differentielle Referenzsignal kann eine positive Polarität aufweisen, wenn zum Beispiel B - A oder A - B größer Null ist, und eine negative Polarität aufweisen, wenn zum Beispiel B - A oder A - B kleiner Null ist. Die absolute Höhe des ersten und zweiten Referenzsignals A, B kann für die Erkennung bzw. das Testen der Sättigung jeweils eines einzelnen Teils der differentiellen Messung relevant sein (engl. "Single-Ended Saturation"). Für einen Test beider Polaritäten reicht es aus, die Verbindungseinheit 50 so anzusteuern, dass jeder der beiden Multiplexer den jeweils anderen Signalgenerator als Eingang verwendet, sodass eine Umkehr der Polarität erfolgen kann, ohne dass einer der beiden Signalgeneratoren neu konfiguriert werden muss.

Beispielsweise kann mittels der Verbindungseinheit 50 wahlweise, und bevorzugt abwechselnd, das erste Referenzsignal A in den ersten Eingang der Verarbeitungseinheit 40 und das zweite Referenzsignal B in den zweiten Eingang der Verarbeitungseinheit 40 eingespeist werden oder das erste Referenzsignal A in den zweiten Eingang der Verarbeitungseinheit 40 und das zweite Referenzsignal B in den ersten Eingang der Verarbeitungseinheit 40 eingespeist werden. In anderen Worten kann die Verbindungseinheit 50 ausgebildet sein, die Polarität des eingespeisten, differentiellen Referenzsignals B - A, A - B zu invertieren. Das differentielle Referenzsignal kann zum Beispiel eine positive Polarität aufweisen, wenn B - A größer Null ist, und eine negative Polarität aufweisen, wenn A - B kleiner Null ist. Das erste und/oder das zweite Referenzsignal A, B sind vorzugsweise veränderbar. Vorzugsweise sind die Signalgeneratoren 10, 20 ausgebildet, während eines Diagnose-Durchlaufs das erste und das zweite Referenzsignal A, B abwechselnd zu verändern. Beispielsweise kann einer der beiden Signalgeneratoren 10, 20 die Amplitude des von ihm erzeugten Referenzsignals A, B verändern während der andere der beiden Signalgeneratoren 10, 20 ein konstantes Referenzsignal erzeugt, um dann in der nächsten Runde das von ihm erzeugte Referenzsignal A, B zu verändern. Der erste und/oder zweite Signalgenerator 10, 20 können ausgebildet sein, während des Diagnose-Durchlaufs unterschiedliche Steigungen für die Änderung der Amplitude des ersten und/oder zweiten Referenzsignals A, B zu verwenden. Der erste und/oder zweite Signalgenerator 10, 20 können folglich ausgebildet sein, während eines Diagnose-Durchlaufs die Amplitude des ersten und/oder zweiten Referenzsignals A, B und damit die Amplitude und/oder Polarität des differentiellen Referenzsignals B - A, A - B zu verändern und dementsprechend einen (Spannungs-) Durchlauf des differentiellen Referenzsignals durchzuführen (engl. "voltage sweep"). In Kombination mit dem Polaritätstausch kann in einem Diagnose-Durchlauf der gesamte Dynamikbereich beider Polaritäten mit kleinerer Anzahl an erzeugten Referenzsignalwerten, und zum Beispiel nur mit der halben Anzahl an erzeugten Referenzsignalwerten, überprüft bzw. abgedeckt werden. Die Signalgeneratoren 10, 20 müssen, jeweils für sich allein gesehen, nicht den gesamten Dynamikbereich abdecken, da der Polaritätstausch bzw. die Polaritätsumschaltung die Prüfung eines differentiellen Referenzsignals mit invertierter Polarität (z.B. B - A, A - B) ermöglicht, ohne dass beispielsweise das differentielle Referenzsignal B - A den gesamten Dynamikbereich beider Polaritäten durchlaufen muss.

Die Verarbeitungseinheit 40 des optoelektronischen Empfängers in Fig. 1 umfasst zumindest einen Verstärker 41, insbesondere einen Differenzverstärker, zur Signalverstärkung. Der Verstärker 41 umfasst einen ersten Eingang und einen zweiten Eingang, wobei der erste Eingang des Verstärkers mit dem Ausgang des ersten Multiplexers 51 für die Einspeisung des ersten Referenzsignals A, des zweiten Referenzsignals B oder des ersten Signalanteils S1 des differentiellen Eingangssignals verbunden ist. Der zweite Eingang des Verstärkers 41 ist mit dem Ausgang des zweiten Multiplexers 52 für die Einspeisung des ersten Referenzsignals A, des zweiten Referenzsignals B oder des zweiten Signalanteils S2 des differentiellen Eingangssignals verbunden. Der Verstärker 41 kann ein programmierbarer Differenzverstärker mit differentiellem Ausgang sein. Der Verstärker kann ausgebildet sein, analoge korrelierte Doppelabtastung ("Correlated Double Sampling", CDS), Verstärker-Offset-Auslöschung ("amplifier offset cancellation") und/oder Pixel-Zurücksetzungs-Spannungssubtraktion ("pixel reset voltage subtraction") bereitzustellen.

Wie in Fig. 1 gezeigt umfasst die Verarbeitungseinheit 40 des optoelektronischen Empfängers 100 zumindest einen ersten und einen zweiten Verstärkungsauswahlkomparator 42, 43, welche mit dem Verstärker 41 verbunden sind und ausgebildet sind, jeweils das differentielle Eingangssignal oder das differentielle Referenzsignal mit einem ersten, insbesondere negativen, Verstärkungsauswahlschwellenwert und mit einem zweiten, insbesondere positiven, Verstärkungsauswahlschwellenwert zu vergleichen, sodass die Verstärkung des Verstärkers 41 basierend auf einem Ausgangssignal der Verstärkungsauswahlkomparatoren 42, 43 ausgewählt werden kann. Die Verstärkungsauswahlschwellenwerte können programmierbar sein und beispielsweise jeweils mittels eines DAC erzeugt werden.

Die in Fig. 1 gezeigte Verarbeitungseinheit 40 umfasst einen Analog-zu-Digital-Wandler (ADC) 44, wobei der Verstärker 41 ausgangsseitig mit dem ADC 44 verbunden ist. In anderen Worten können die Verbindungseinheit mit den zwei Multiplexern 51, 52, der Verstärker 41 und der ADC 44 in Reihe geschaltet sein. Der ADC 44 kann einen Analog-zu-Digital-Wandler mit differentiellem Eingang umfassen. Der ADC 44 kann einen Analog-zu-Digital-Wandler mit differentiellem Eingang umfassen, der entsprechend vorzeichenbehaftete Ausgangsdaten liefert.

Der optoelektronische Empfänger 100 in Fig.1 kann optional eine (programmierbare) Datenvorverarbeitungseinheit 70 umfassen, welche ausgebildet ist, ein digitales Ausgangssignal des ADC 44 zu verarbeiten. Die Datenvorverarbeitungseinheit 70 kann ausgebildet sein, eine Normalisierung verschiedener Verstärkungseinstellungen des Verstärkers 41 und/oder eine Formatkonvertierung eines digitalen Ausgangssignals des ADC 44 bereitzustellen. Die Datenvorverarbeitungseinheit 70 kann ausgebildet sein, eine Formatkonvertierung digitaler Daten basierend auf dem digitalen Ausgangssignals des ADC 44 vor Übertragung an die nachgeschaltete Datenverarbeitungseinheit 400 bereitzustellen.

Die Datenverarbeitungseinheit 400 des optoelektronischen Sensors 1 (Fig. 1) ist mit der Datenvorerarbeitungseinheit 70 des optoelektronischen Empfängers 100 verbunden, um ein vorverarbeitetes Signal zu empfangen und weiterzuverarbeiten.

Wie in Fig. 1 dargestellt kann jeweils eine Verbindungseinheit 50 und eine Verarbeitungseinheit 40 für jede einzelne Spalte der n Spalten und/oder jede einzelne Zeile der m Zeilen des Pixelarrays 30 vorgesehen sein. Beispielsweise können in dem optoelektronischen Empfänger 100, wie er in Fig. 1 gezeigt ist, eine Anzahl von n Verbindungseinheiten 50 und (eine Anzahl von n) Verarbeitungseinheiten 40 vorhanden sein. Alternativ kann jeweils eine Verbindungseinheit 50 und eine Verarbeitungseinheit 40 für mehrere Spalten und/oder Zeilen zusammengenommen und/oder nur für bestimmte Spalten und/oder Zeilen vorgesehen sein.

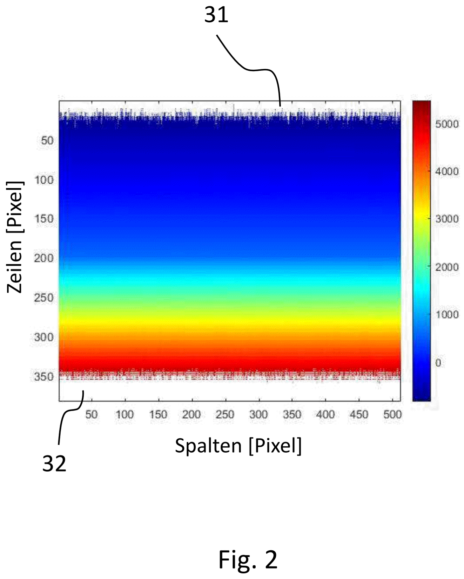

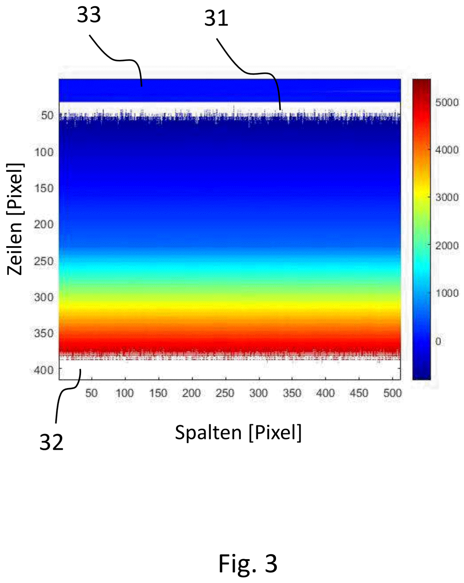

Fig. 2 und Fig. 3 zeigen jeweils eine graphische Darstellung von Diagnosedaten, welche mit einem ähnlichen oder dem gleichen wie in Fig. 1 gezeigten optoelektronischen Sensor 1 während eines Diagnose-Durchlaufs aufgenommen worden sind. Die in Fig. 2 und Fig. 3 gezeigten graphischen Darstellungen der Diagnosedaten können auch als Diagnosebilder bezeichnet werden. Die einzelnen Bildpunkte eines derartigen Diagnosebildes stehen, durch das Abtrennen der Ausgänge des Pixelarrays 30 durch die Verbindungseinheit 50, nicht mehr im Zusammenhang zu den einzelnen Pixeln des Pixelarrays. Die gezeigten Daten der Bildpunkte entstehen durch die erzeugten Referenzsignale und daher allein durch gezielte Ansteuerung der Signalgeneratoren 10, 20, der Verbindungseinheit 50, sowie der Verarbeitungseinheit 40 und der Datenvorerarbeitungseinheit 70. Die Darstellung soll hier den Verlauf der Spannungsrampe verdeutlichen, wobei jeder Bildpunkt der gezeigten Diagnosedaten einem von der Datenvorerarbeitungseinheit 70 ausgegebenen digitalen Wert entspricht, der auf das von den Signalgeneratoren 10, 20 erzeugte differentielle Referenzsignal zurückzuführen ist. In dem optoelektronischen Sensor kann für jede Spalte des Pixelarrays eine Verbindungseinheit und eine Verarbeitungseinheit vorgesehen sein, sodass jede Spalte des Pixelarrays in einem Diagnose-Durchlauf überprüft werden kann. Während des Diagnose-Durchlaufs wurde ein Spannungsdurchlauf (engl. "voltage sweep") durch die Signalgeneratoren 10, 20 erzeugt. Hierfür wurde die Amplitude eines ersten Referenzsignals A, erzeugt von einem ersten Signalgenerator 10, mit unterschiedlichen Steigungen verändert und für jede zweite Zeile der Diagnosedaten die Polarität mittels der Verbindungseinheit 50 vertauscht, d.h. bei jeder geradzahligen Zeile des Pixelarrays 30 wurde das von dem ersten Signalgenerator 10 erzeugte erste Referenzsignal A in den ersten Eingang des Verstärkers 41 und das von einem zweiten Signalgenerator 20 erzeugte zweite Referenzsignal B in den zweiten Eingang des Verstärkers 41 eingespeist. Zur Erzeugung der Diagnosedaten für die ungeradzahligen Zeilen wurde entsprechend das von dem zweiten Signalgenerator 20 erzeugte zweite Referenzsignal B in den ersten Eingang des Verstärkers 41 und das von dem ersten Signalgenerator 10 erzeugte erste Referenzsignal A in den zweiten Eingang des Verstärkers 41 eingespeist. Durch Auswahl der Startwerte und Steigungen kann es, wie hier gezeigt, ermöglicht sein, dass der zweite Signalgenerator 20 nicht variiert werden muss, was den Spannungsdurchlauf weiter vereinfacht. In den in Fig. 2 und Fig. 3 gezeigten graphischen Darstellungen der Diagnosedaten ist zur vereinfachten Veranschaulichung der Polaritätswechsel korrigiert worden, sodass der Verlauf der resultierenden verarbeiteten, differentiellen Referenzsignale dargestellt ist. Wie in Fig. 2 und Fig. 3 gekennzeichnet sind die unteren Zeilen 31 des Pixelarrays 30 (im Bereich von weniger als 40 bzw. 70 Pixel) in sogenannter Single-Ended-Sättigung, d.h. die Amplitude der Referenzsignale A und/oder B entspricht einer Sättigung eines Speicherelements des differentiellen Pixels. Es ist zu sehen, dass durch die Toleranzen der einzelnen Verarbeitungseinheiten die Single-Ended-Sättigung bei unterschiedlichen Amplituden erreicht wird. Da es möglich ist, Bereiche zu definieren, in denen Sättigung vorliegen muss, oder nicht mehr vorliegen darf, kann mit Hilfe dieser Diagnosedaten 31 überprüft werden, ob die Erkennung der Single-Ended-Sättigung möglich ist und daraus gefolgert werden, ob diese Erkennung auch während der Aufnahme von (Live-) Messdaten noch korrekt funktioniert, d.h. es kann erkannt werden, ob eines der beiden Signalanteile des differentiellen Ausgangssignals bzw. eines der Speicherelemente des differentiellen Pixels in Sättigung ist, sodass keine Messung möglich ist. Die oberen Zeilen 32 des Pixelarrays 30 (im Bereich von mehr als 340 Pixel bzw. 360 Pixel) entsprechen einer Sättigung des ADC, d.h. ein zu niedriges oder zu hohes (Differenz-)Signal liegt vor. Die Signalanteile A und B können beispielsweise so weit auseinanderliegen, dass der ADC in Sättigung geht. Der optoelektronische Sensor für die Aufnahme der in Fig. 3 gezeigten Diagnosedaten umfasst zusätzlich Dunkelpixel. Von diesen wurden zunächst Dunkelpixeldaten 33 ausgelesen und dann die während des Diagnose-Durchlaufs aufgenommene Diagnosedaten hinzugefügt, um ein kombiniertes Diagnosebild zu erzeugen, wie es in Fig. 3 gezeigt ist.

Ein Fehler des optoelektronischen Empfängers 100 kann anhand der Diagnosedaten beispielsweise daran erkannt werden, dass im Vergleich zum Normalzustand Änderungen in den Diagnosedaten bzw. dem Diagnosebild erkannt werden, also z.B. Änderungen im Signalpegel, der für die jeweilige Zeile des Diagnosebildes erwartet wird und/oder zulässig ist, oder eine Sättigungsinformation, die in Abhängigkeit der Zeile des Diagnosebildes erwartet wird oder zulässig ist. Auf die Erkennung eines Fehlers in den Diagnosedaten hin kann beispielsweise von dem optoelektronischen Sensor ein Warnsignal ausgegeben werden.

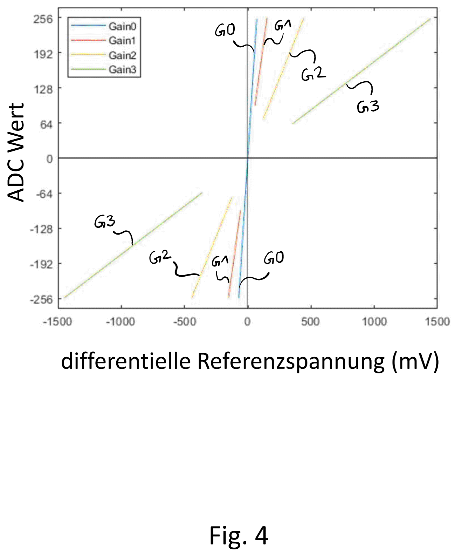

Fig. 4 zeigt eine graphische Darstellung verschiedener Verstärkungen G0 bis G3 (bzw. Gain0 bis Gain3) mit einem Verstärker eines optoelektronischen Sensors, wie er in Fig. 1 gezeigt ist, und veranschaulicht den Einfluss der Verstärkungen (bzw. Verstärkungseinstellungen) auf die digitalen Ausgabewerte des ADC. Die beiden Referenzsignale A und B erzeugt durch die beiden Signalgeneratoren 10, 20 können Spannungssignale sein und von dem Verstärker als differentielle Referenzspannung ausgegeben werden, welche in der Folge von dem ADC in das Digitale übersetzt wird. Wie in Fig. 4 dargestellt kann eine bessere Abdeckung des gesamten Dynamikbereichs von Verstärker und ADC für kleine Signalpegel, das heißt notwendigerweise auch hohe Verstärkungen (z.B. G0) erreicht werden, indem eine feinere Schrittweite für die durch die Signalgeneratoren 10, 20 erzeugte differentielle Referenzspannung verwendet wird, wohingegen für niedrigere Verstärkungen (z.B. G3) eine größere Schrittweite für die erzeugte differentielle Referenzspannung ausreichend ist. Die Wahl einer kleineren Schrittweite für kleine Signalpegel führt zu einer größeren Anzahl an unterschiedlichen Referenzspannungen (und damit Testpunkten), die für den Test der Verarbeitungseinheit 40 verwendet werden können.

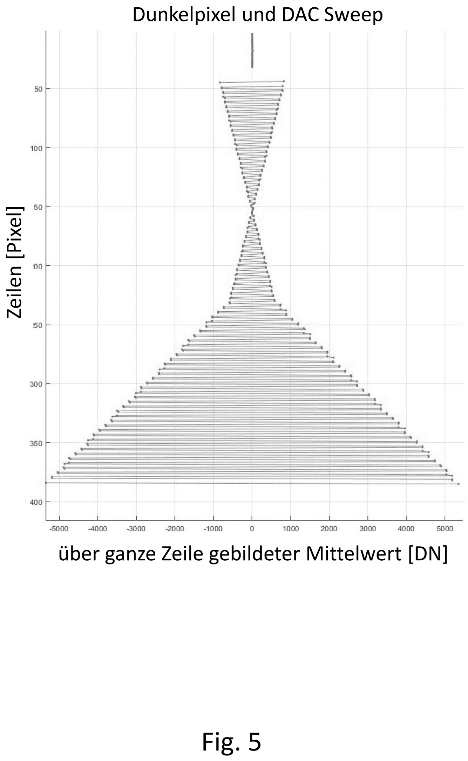

Fig. 5 zeigt eine weitere graphische Darstellung der Diagnosedaten aus Fig. 3. Genauer zeigt Fig. 5 die zeilenweise (mit Berücksichtigung der Polarität) gebildeten Mittelwerte der Diagnosedaten in Fig. 3 und veranschaulicht die unterschiedlichen Steigungen bzw. die Schrittweiten in den Referenzsignalen für den Diagnose-Durchlauf. Zu sehen sind am oberen Rand die Daten mehrere Zeilen an Dunkelpixel (bis Zeile 32), gefolgt von einem Abschnitt mit Zeilen (in etwa Zeile 32-40), die sich in Single-Ended-Sättigung befinden, gefolgt von einem Spannungsdurchlauf mit unterschiedlichen Steigungen bei fortlaufendem Polaritätswechsel durch die Verbindungseinheit während einem Spannungsdurchlauf durch nur einen Signalgenerator mit abschließendem Auftreten der ADC-Sättigung für beide Polaritäten des differentiellen Referenzsignals am unteren Ende des Diagnosebildes (ab etwa Zeile 380).

### Bezugszeichenliste

- 1: optoelektronischer Sensor
- 10: erster Signalgenerator
- 20: zweiter Signalgenerator
- 30: Pixelarray
- 31: Zeilen des Diagnosebildes in Single-Ended-Sättigung
- 32: Zeilen des Diagnosebildes in ADC-Sättigung
- 33: Dunkelpixeldaten
- 40: Verarbeitungseinheit
- 41: Verstärker
- 42: erster Verstärkungsauswahlkomparator
- 43: zweiter Verstärkungsauswahlkomparator
- 44: Analog-zu-Digital-Wandler
- 50: Verbindungseinheit
- 51: erster Multiplexer
- 52: zweiter Multiplexer
- 53: erster Eingang der Verbindungseinheit
- 54: zweiter Eingang der Verbindungseinheit
- 60: Steuerung
- 70: Datenvorverarbeitungseinheit
- 100: optoelektronischer Empfänger
- 200: Lichtsender
- 300: Stromversorgung
- 400: Datenverarbeitungseinheit

## Patentansprüche

1. Optoelektronischer Empfänger (100), insbesondere für Abstandsmessung mittels Laufzeitverfahren, umfassend
zumindest einen Signalgenerator (10, 20) zur Erzeugung zumindest eines Referenzsignals (A, B);
ein Pixelarray (30) mit zumindest einem differentiellen Pixel, wobei das Pixelarray (30) ausgebildet ist, basierend auf empfangenem Empfangslicht ein differentielles Ausgangssignal zu erzeugen und auszugeben;
zumindest eine Verarbeitungseinheit (40) zur Signalverarbeitung; und
zumindest eine Verbindungseinheit (50), welche mit dem Pixelarray (30), dem Signalgenerator (10, 20) und der Verarbeitungseinheit (40) verbunden ist und ausgebildet ist, wahlweise das Pixelarray (30) oder den Signalgenerator (10, 20) mit der Verarbeitungseinheit (40) zu koppeln, sodass wahlweise das differentielle Ausgangssignal als differentielles Eingangssignal oder das Referenzsignal (A, B) in die Verarbeitungseinheit (40) zur Signalverarbeitung eingespeist werden kann, wobei die Verbindungseinheit (50) ausgebildet ist, zum Zweck der Diagnose, insbesondere für die Aufnahme von Diagnosedaten, den Signalgenerator (10, 20) mit der Verarbeitungseinheit (40) in bestimmten Zeitabständen, und vorzugsweise mit der gleichen Aufnahmerate wie die Abstandsmessung und/oder am Ende jeder Beleuchtungsphase der Abstandsmessung, zu koppeln.

2. Optoelektronischer Empfänger nach Anspruch 1, wobei die Komponenten des optoelektronischen Empfängers (100), insbesondere der Signalgenerator (10, 20), für eine Kalibrierung des optoelektronischen Empfängers (100) vorinstalliert sind.

3. Optoelektronischer Empfänger (100) nach Anspruch 1 oder 2,
wobei bei einer Überwachung zumindest einer anderen Komponente des optoelektronischen Empfängers erzeugte Testdaten durch die Diagnosedaten ersetzt werden;
wobei die Diagnosedaten und echte Messdaten in zumindest einem kombinierten Ausgabebild zusammengeführt werden, wobei vorzugsweise während eines Diagnose-Durchlaufs mehrere kombinierte Ausgabebilder erzeugt werden, wobei vorzugsweise während eines Diagnose-Durchlaufs aufgenommene Diagnosedaten stückweise an die echten Messdaten angefügt werden, um die mehreren kombinierten Ausgabebilder zu erzeugen, und/oder
wobei der optoelektronischen Empfänger zusätzlich zumindest ein Dunkelpixel umfasst, welches ausgebildet ist, ein Dunkelsignal zu erzeugen und auszugeben, wobei die Diagnosedaten und dem Dunkelsignal entsprechende Dunkelpixeldaten und/oder echte Messdaten in zumindest einem kombinierten Ausgabebild zusammengeführt werden.

4. Optoelektronischer Empfänger (100) nach einem der voranstehenden Ansprüche, wobei das Referenzsignal (A, B) statisch oder veränderbar ist, wobei der Signalgenerator (10, 20) vorzugsweise ausgebildet ist, während eines Diagnose-Durchlaufs die Amplitude des Referenzsignals (A, B) zu verändern, vorzugsweise in dem Diagnose-Durchlauf den gesamten Dynamikbereich des optoelektronischen Empfängers, bevorzugt einschließlich von Single-Ended-Sättigung und/oder Sättigung einer Analog-zu Digital-Wandlung, zu testen, und/oder vorzugsweise während des Diagnose-Durchlaufs unterschiedliche Steigungen für die Änderung der Amplitude des Referenzsignals (A, B) zu verwenden.

5. Optoelektronischer Empfänger (100) nach einem der voranstehenden Ansprüche, wobei das Pixelarray (30) einen ersten Ausgang für die Ausgabe eines ersten Signalanteils (S1) des differentiellen Ausgangssignals und einen zweiten Ausgang für die Ausgabe eines zweiten Signalanteils (S2) des differentiellen Ausgangssignals umfasst, wobei ein erster Eingang (53) der Verbindungseinheit (50) mit dem ersten Ausgang des Pixelarrays (30) und ein zweiter Eingang (54) der Verbindungseinheit (50) mit dem zweiten Ausgang des Pixelarrays (30) verbunden ist.

6. Optoelektronischer Empfänger (100) nach Anspruch 5,
wobei der optoelektronische Empfänger (100) einen ersten Signalgenerator (10) zur Erzeugung eines ersten Referenzsignals (A) und einen zweiten Signalgenerator (20) zur Erzeugung eines zweiten Referenzsignals (B) umfasst,
wobei die Verbindungseinheit (50) mit dem ersten Ausgang des Pixelarrays (30), dem zweiten Ausgang des Pixelarrays (30), dem ersten Signalgenerator (10), dem zweiten Signalgenerator (20), einem ersten Eingang der Verarbeitungseinheit (40) und einem zweiten Eingang der Verarbeitungseinheit (40) verbunden ist und ausgebildet ist, wahlweise den ersten und zweiten Ausgang des Pixelarrays (30) mit dem ersten beziehungsweise zweiten Eingang der Verarbeitungseinheit (40) oder den ersten und zweiten Signalgenerator (10, 20) mit dem ersten beziehungsweise zweiten Eingang der Verarbeitungseinheit (40) zu koppeln, sodass wahlweise der erste und zweite Signalanteil (S1, S2) des differentiellen Ausgangssignals als erster beziehungsweise zweiter Signalanteil des differentiellen Eingangssignals oder das erste und zweite Referenzsignal (A, B) in die Verarbeitungseinheit (40) zur Signalverarbeitung eingespeist werden kann.

7. Optoelektronischer Empfänger (100) nach Anspruch 6,
wobei der erste Eingang (53) der Verbindungseinheit (50) mit dem ersten und dem zweiten Signalgenerator (10, 20) verbunden ist,
wobei der zweite Eingang (54) der Verbindungseinheit (50) mit dem ersten und dem zweiten Signalgenerator (10, 20) verbunden ist,
wobei die Verbindungseinheit (50) ausgebildet ist, zum Zweck der Diagnose, insbesondere für die Aufnahme der Diagnosedaten, vorzugsweise abwechselnd, den ersten Signalgenerator (10) mit dem ersten Eingang der Verarbeitungseinheit (40) und den zweiten Signalgenerator (20) mit dem zweiten Eingang der Verarbeitungseinheit (40) oder den ersten Signalgenerator (10) mit dem zweiten Eingang der Verarbeitungseinheit (40) und den zweiten Signalgenerator (20) mit dem ersten Eingang der Verarbeitungseinheit (40) zu koppeln.

8. Optoelektronischer Empfänger (100) nach Anspruch 6 oder 7, wobei die Verbindungseinheit umfasst:
einen ersten Multiplexer (51), umfassend
einen ersten Eingang, welcher mit dem ersten Ausgang des Pixelarrays (30) für die Einspeisung des ersten Signalanteils (S1) des differentiellen Ausgangssignals des Pixelarrays (30) als den ersten Signalanteil des differentiellen Eingangssignals verbunden ist, einen zweiten Eingang, welcher mit dem ersten Signalgenerator (10) für die Einspeisung des ersten Referenzsignals (A) verbunden ist, einen dritten Eingang, welcher mit dem zweiten Signalgenerator (20) für die Einspeisung des zweiten Referenzsignals (B) verbunden ist, und
einen Ausgang für die Ausgabe des ersten Referenzsignals (A), des zweiten Referenzsignals (B) oder des ersten Signalanteils (S1) des differentiellen Eingangssignals; und
einen zweiten Multiplexer (52), umfassend
einen ersten Eingang, welcher mit dem zweiten Ausgang des Pixelarrays (30) für die Einspeisung des zweiten Signalanteils (S2) des differentiellen Ausgangssignals des Pixelarrays (30) als den zweiten Signalanteil des differentiellen Eingangssignals verbunden ist,
einen zweiten Eingang, welcher mit dem ersten Signalgenerator (10) für die Einspeisung des ersten Referenzsignals (A) verbunden ist, einen dritten Eingang, welcher mit dem zweiten Signalgenerator (20) für die Einspeisung des zweiten Referenzsignals (B) verbunden ist, und
einen Ausgang für die Ausgabe des ersten Referenzsignals (A), des zweiten Referenzsignals (B) oder des zweiten Signalanteils (S2) des differentiellen Eingangssignals,
wobei der erste Multiplexer (51) und der zweite Multiplexer (52) ausgebildet sind, zum Zweck der Diagnose, insbesondere für die Aufnahme der Diagnosedaten, gleichzeitig das erste Referenzsignal (A) und das zweite Referenzsignal (B) auszugeben, wobei der erste Multiplexer (51) das erste Referenzsignal (A) und der zweite Multiplexer (52) das zweite Referenzsignal (B) ausgibt oder umgekehrt, wobei sich der erste Multiplexer (51) und der zweite Multiplexer (52) vorzugsweise bei der Ausgabe des ersten Referenzsignals (A) und des zweiten Referenzsignals (B) abwechseln.

9. Optoelektronischer Empfänger (100) nach einem der Ansprüche 6 bis 8, wobei das erste Referenzsignal (A) und das zweite Referenzsignal (B) an den Ausgängen der Verbindungseinheit (50) und/oder an den Eingängen der Verarbeitungseinheit (40) in Bezug auf oder durch die Verarbeitungseinheit (40) ein differentielles Referenzsignal definieren, wobei das differentielle Referenzsignal je nach Kopplungseinstellung der Verbindungseinheit (50) eine positive oder eine negative Polarität aufweist, wobei vorzugsweise die Verbindungseinheit (50) ausgebildet ist, die Polarität des differentiellen Referenzsignals zu invertieren, und bevorzugt mehrfach während eines Diagnose-Durchlaufs zu invertieren; und/oder wobei das erste und/oder das zweite Referenzsignal (A, B) statisch oder veränderbar sind, wobei der erste und/oder zweite Signalgenerator (10, 20) vorzugsweise ausgebildet sind, während eines Diagnose-Durchlaufs die Amplitude des ersten und/oder zweiten Referenzsignals (A, B) zu verändern, vorzugsweise in dem Diagnose-Durchlauf den gesamten Dynamikbereich des optoelektronischen Empfängers, bevorzugt einschließlich von Single-Ended-Sättigung und/oder Sättigung einer Analog-zu Digital-Wandlung, zu testen, und/oder vorzugsweise während des Diagnose-Durchlaufs unterschiedliche Steigungen für die Änderung der Amplitude des ersten und/oder zweiten Referenzsignals (A, B) zu verwenden.

10. Optoelektronischer Empfänger (100) nach einem der voranstehenden Ansprüche, wobei die Verarbeitungseinheit (40) zumindest einen Verstärker (41), insbesondere Differenzverstärker, zur Signalverstärkung umfasst; und/oder wobei die Verarbeitungseinheit (40) ferner einen Analog-zu-Digital-Wandler (44) umfasst, wobei vorzugsweise der Verstärker (41) ausgangsseitig mit dem Analog-zu-Digital-Wandler (44) verbunden ist.

11. Optoelektronischer Empfänger (100) nach Anspruch 10,
wobei die Verarbeitungseinheit (40) ferner zumindest einen Verstärkungsauswahlkomparator (42, 43) umfasst, welcher mit dem Verstärker (41) verbunden ist und ausgebildet ist, das differentielles Eingangssignal oder das Referenzsignal (A, B), insbesondere das differentielle Referenzsignal, mit zumindest einem Verstärkungsauswahlschwellenwert zu vergleichen, sodass die Verstärkung des Verstärkers (41) basierend auf einem Ausgangssignal des Verstärkungsauswahlkomparators (42, 43) ausgewählt werden kann.

12. Optoelektronischer Empfänger (100) nach einem der voranstehenden Ansprüche, wobei das Pixelarray (30) eine Vielzahl von differentiellen Pixeln umfasst, wobei die Vielzahl von differentiellen Pixeln in Spalten und/oder Zeilen angeordnet sind,
wobei jeweils eine Verbindungseinheit (50) und eine Verarbeitungseinheit (40) für jede einzelne Spalte und/oder Zeile vorgesehen ist oder wobei jeweils eine Verbindungseinheit (50) und eine Verarbeitungseinheit (40) für mehrere Spalten und/oder Zeilen zusammengenommen und/oder nur für bestimmte Spalten und/oder Zeilen vorgesehen ist, wobei vorzugsweise Spalten und/oder Zeilen für die Durchführung der Diagnose ausgewählt werden, welche für die Abstandsmessung ungeeignet sind, und/oder wobei vorzugsweise dasselbe Referenzsignal (A, B) für mehrere Spalten und/oder Zeilen verwendet wird.

13. Optoelektronischer Sensor (1), insbesondere für Abstandsmessung mittels Laufzeitverfahren, bevorzugt zur Anwendung in einer Industrieanlage und/oder für Sicherheitsanwendungen, umfassend zumindest einen optoelektronischen Empfänger (100) nach einem der voranstehenden Ansprüche 1 bis 12 und einen Lichtsender (200).

14. Verwendung eines optoelektronischen Empfängers (100) nach einem der Ansprüche 1 bis 12 für Abstandsmessung mittels Laufzeitverfahren.

15. Verfahren zur Betriebsüberwachung eines optoelektronischen Empfängers (100) nach einem der Ansprüche 1 bis 12, insbesondere für Abstandsmessung mittels Laufzeitverfahren, umfassend Erzeugen zumindest eines Referenzsignals (A, B);
Ausgeben eines basierend auf empfangenem Empfangslicht erzeugten differentiellen Ausgangssignals; und
wahlweises Einspeisen des differentiellen Ausgangssignals als differentielles Eingangssignal oder des Referenzsignals (A, B) in die Verarbeitungseinheit (40) zur Signalverarbeitung, wobei das Referenzsignal (A, B) zum Zweck der Diagnose, insbesondere für die Aufnahme von Diagnosedaten, in bestimmten Zeitabständen, und vorzugsweise mit der gleichen Aufnahmerate wie die Abstandsmessung und/oder am Ende jeder Beleuchtungsphase der Abstandsmessung, in die Verarbeitungseinheit (40) eingespeist wird.
